(19) Europäisches Patentamt
European Patent Office
Office européen des brevets

(11) **EP 0 983 966 B1**

(12) **EUROPÄISCHE PATENTSCHRIFT**

(45) Veröffentlichungstag und Bekanntmachung des Hinweises auf die Patenterteilung:
**07.11.2001 Patentblatt 2001/45**

(51) Int Cl.$^7$: **C01B 33/193**, C09C 1/30, C08K 3/36

(21) Anmeldenummer: **99115208.3**

(22) Anmeldetag: **31.07.1999**

(54) **Fällungskieselsäure**

Precipitated silica

Silice de précipitation

(84) Benannte Vertragsstaaten:
**BE DE ES FR NL**

(30) Priorität: **03.09.1998 DE 19840153**

(43) Veröffentlichungstag der Anmeldung:
**08.03.2000 Patentblatt 2000/10**

(73) Patentinhaber: **Degussa AG**
**40474 Düsseldorf (DE)**

(72) Erfinder:
• **Blume, Anke, Dr.**
**50374 Erfstadt (DE)**
• **Freund, Burkhard, Dr.**
**50374 Erfstadt (DE)**
• **Schwaiger, Bernhard**
**50374 Erfstadt (DE)**
• **Siray, Mustafa, Dr.**
**53127 Bonn (DE)**
• **Uhrlandt, Stefan, Dr.**
**51143 Köln (DE)**

(56) Entgegenhaltungen:
**EP-A- 0 647 591        EP-A- 0 745 558**
**EP-A- 0 901 986        WO-A-95/09127**
**WO-A-96/30303        DE-A- 4 423 493**
**US-A- 4 040 858**

**Beschreibung**

Die Erfindung betrifft Fällungskieselsäuren, das Verfahren zu ihrer Herstellung und ihre Verwendung in Kautschukmischungen.

Es ist bekannt, Fällungskieselsäuren in Kautschukmischungen einzuarbeiten (S. Wolff, Kautschuk, Gummi, Kunstst. 7 (1988) S. 674). Fällungskieselsäuren müssen für die Anwendung in Kautschukmischungen leicht dispergierbar sein. Eine schlechte Dispergierbarkeit ist häufig die Ursache dafür, daß Fällungskieselsäuren in Reifenmischungen nicht zum Einsatz kommen.

Aus dem Dokument WO 95/09128 sind Fällungskieselsäuren bekannt, die in Reifen eingesetzt werden können. Eine Anwendung im Reifenunterbau wird nicht angegeben.

Durch gestiegene Anforderungen der Reifenindustrie ist auch die verbesserte Dispersion dieser Fällungskieselsäure für die Anwendung in Reifenlaufflächen nicht mehr ausreichend.

In WO 96/30304 wird eine Fällungskieselsäure, die in Reifenlaufflächen dispergierbar ist, beschrieben.

Mit der bekannten, in WO 96/30304 beschriebenen Fällungskieselsäure ist eine Reduktion des Rollwiderstandes des Reifens um 20-30% im Vergleich zu mit Ruß gefüllten Reifen möglich. Dies bedeutet eine Kraftstoffersparnis um ca. 5%.

Zum Rollwiderstand eines PKW-Reifens tragen unterschiedliche Reifenbauteile mit verschiedenen Anteilen bei:

| Lauffläche | 50 % |
|---|---|
| Gürtel | 20 % |
| Karkasse | 10 % |
| Seitenwand | 10 % |
| Wulst | 5 % |
| Innenschicht | 5 % |

Bei einem LKW-Reifen ist der Anteil der einzelnen Reifensegmente am Rollwiderstand unterschiedlich zu der Verteilung bei einem PKW-Reifen:

| Lauffläche | 30 % |
|---|---|
| Gürtel | 20 % |
| Karkasse | 24 % |
| Seitenwand | 10 % |
| Wulst | 16 % |

Diese Rollwiderstandsanteilverteilung zeigt, daß im PKW-Reifen 50 % und im LKW-Reifen sogar 70 % des Rollwiderstandes durch Bauteile aus dem Reifenunterbau beeinflußt werden. Bislang werden im Reifenunterbau überwiegend Ruße als aktive Füllstoffe eingesetzt.

Die Erfindung betrifft die Entwicklung von Fällungskieselsäuren für den Einsatz im Reifenunterbau, mit dem Ziel, eine weitere deutliche Absenkung des Rollwiderstandes zu erreichen. Die Voraussetzung für den Einsatz von Fällungskieselsäuren im Reifenunterbau ist deren leichte Dispergierbarkeit.

Von Seiten der Automobilindustrie besteht die Forderung, den Rollwiderstand um weitere ca. 10 % abzusenken. Dieses ist bislang nicht möglich gewesen.

LKW-Reifenkunden fordern zusätzlich eine Erhöhung der Lebensdauer von LKW-Reifen. Der Einsatz der erfindungsgemäßen Fällungskieselsäuren erfüllt auch diese Forderung mit einer Absenkung der Wärmebildung.

Gegenstand der Erfindung ist eine Fällungskieselsäure, welche gekennzeichnet ist durch einen $Al_2O_3$-Gehalt von 0,2 bis 5,0 Gew.-% und einem durch Laserstreuung bestimmten wk-Koeffizienten kleiner 3,4. (Verhältnis der Peakhöhe der durch Ultraschall nicht abbaubaren Partikel im Bereich 1.0 - 100 μm zur Peakhöhe der abgebauten Partikel mit Maximum im Bereich < 1.0 μm).

Die erfindungsgemäße Fällungskieselsäure kann eine BET-Oberfläche von 80 bis 180 $m^2$/g aufweisen.

Die erfindungsgemäße Fällungskieselsäure kann eine CTAB-Oberfläche von 80 bis 139 $m^2$/g aufweisen.

Die erfindungsgemäße Fällungskieselsäure kann durch die folgenden physikalisch-chemischen Daten gekennzeichnet sein:

| BET-Oberfläche | 80 - 180 $m^2$/g |
|---|---|

(fortgesetzt)

| | |
|---|---|
| CTAB-Oberfläche | 80 - 139 m$^2$/g |
| Verhältnis BET/CTAB | 1,0 - 1,6 |
| Searszahl (Verbrauch 0,1 n NaOH) | 5 - 25 ml |
| DBP-Zahl | 200 - 300 ml/100 g |
| Al$_2$O$_3$-Gehalt | < 5 % |
| wk-Koeffizient | < 3,4 |
| abgebaute Partikel | < 1,0 µm |
| nicht abbaubare Partikel | 1,0 - 100 µm |

Die physikalisch-chemischen Daten werden mit folgenden Methoden bestimmt:

| | |
|---|---|
| BET-Oberfläche | Areameter, Fa. Ströhlein, gemäß ISO 5794/Annex D |
| CTAB-Oberfläche | bei pH 9, gemäß Jay, Janzen und Kraus in "Rubber Chemistry and Technology" 44 (1971) 1287 |
| Searszahl | nach G.W. Sears, Analyt. Chemistry 12 (1956) 1982 |
| DBP-Zahl | ASTM D 2414-88 |
| wk-Koeffizient | Cilas-Granulometer 1064 L (Beschreibung siehe unten) |

Die erfindungsgemäße Fällungskieselsäure kann in einer bevorzugten Ausführungsform die folgenden physikalisch-chemischen Daten aufweisen:

| | |
|---|---|
| BET-Oberfläche | 90 - 150 m$^2$/g |
| CTAB-Oberfläche | 80 - 130 m$^2$/g |
| Verhältnis BET/CTAB | 1,0 - 1,6 |
| Searszahl (Verbrauch 0,1 n NaOH) | 5 - 25 ml |
| DBP-Zahl | 200 - 300 ml/100 g |
| Al$_2$O$_3$ -Gehalt | < 2 % |
| wk-Koeffizient | < 3,4 |
| abgebaute Partikel | < 1,0 µm |
| nicht abbaubare Partikel | 1,0 - 30 µm |

Die erfindungsgemäße Fällungskieselsäure kann in einer besonders bevorzugten Ausführungsform die folgenden physikalisch-chemischen Daten aufweisen:

| | |
|---|---|
| BET-Oberfläche | 90 - 150 m$^2$/g |
| CTAB-Oberfläche | 80 - 130 m$^2$/g |
| Verhältnis BET/CTAB | 1,0 - 1,6 |
| Searszahl (Verbrauch 0,1 n NaOH) | 5 - 25 ml |
| DBP-Zahl | 200 - 300 ml/100 g |
| Al$_2$O$_3$-Gehalt | 0,2 bis 0,66 % |
| wk-Koeffizient | < 3,4 |
| abgebaute Partikel | < 1,0 µm |
| nicht abbaubare Partikel | 1,0 - 30 µm |

Der wk-Koeffizient bezeichnet das Verhältnis der Peakhöhe der durch Ultraschall nicht abbaubaren Partikel im Bereich 1.0 - 100 µm zur Peakhöhe der abgebauten Partikel mit Maximum im Bereich < 1.0 µm).

Ein weiterer Gegenstand der Erfindung ist ein Verfahren zur Herstellung der Fällungskieselsäure mit den folgenden physikalisch-chemischen Parametern:

| BET-Oberfläche | 80 - 160 m$^2$/g |
| --- | --- |
| CTAB-Oberfläche | 80 - 140 m$^2$/g |
| Verhältnis BET/CTAB | 1,0 - 1,6 |
| Searszahl (Verbrauch 0,1 n NaOH) | 5 - 25 ml |
| DBP-Zahl | 200 - 300 ml/100 g |
| Al$_2$O$_3$-Gehalt | 0,2 bis 5 % |
| wk-Koeffizient | < 3,4 |
| abgebaute Partikel | < 1,0 μm |
| nicht abbaubare Partikel | 1,0 - 100 μm |

welches dadurch gekennzeichnet ist, daß man Alkalisilikat mit Mineralsäuren und Aluminiumsulfatlösung bei Temperaturen von 60 - 95 °C bei einem pH-Wert von 7,0 - 11,0 unter kontinuierlichem Rühren umsetzt, die Umsetzung bis zu einer Feststoffkonzentration von 40 g/l - 110 g/l fortsetzt, den pH-Wert auf einen Wert zwischen 3 und 5 einstellt, die Fällungskieselsäure abfiltriert, wäscht, anschließend trocknet und gegebenenfalls vermahlt oder granuliert.

In einer besonderen Form kann die Zugabe von Wasserglas, Aluminiumsulfatlösung und Schwefelsäure für 30 - 90 min unterbrochen und anschließend fortgesetzt werden.

In einer bevorzugten Ausführungsform kann man handelsübliches Natronwasserglas (Modul 3,2 - 3,5) mit Schwefelsäure bei einem pH-Wert zwischen 7,5 und 10,5 umsetzen, wobei ein Teil des Natronwasserglases bereits zum Einstellen des pH-Wertes in die Vorlage gegeben wird. Die Zugabe von Wasserglas und Schwefelsäure wird über einen Zeitraum bis 120 min aufrechterhalten, wobei in einer besonderen Form die Zugabe für 30 - 90 min unterbrochen werden kann, anschließend kann auf pH 3 - 5 angesäuert, filtriert, gewaschen und getrocknet werden.

Zur Erzielung einer besonders guten Dispergierbarkeit erfolgt die gleichzeitige Zugabe von Natronwasserglas und Schwefelsäure vorzugsweise zwischen 40 - 90 min. Dabei kann die Oberfläche der Kieselsäure über die Fälldauer eingestellt werden.

Zur Filtration kann man Kammerfilterpressen oder Membranfilterpressen oder Bandfilter oder Drehfilter oder Membranfilterpressautomaten oder zwei der Filter in Kombination einsetzen.

Zur Trocknung kann man einen Stromtrockner, Etagentrockner, Flash-Trockner, Spin-Flash-Trockner oder ähnliche Einrichtungen einsetzen.

In einer weiteren Ausführungsform der Erfindung kann man verflüssigten Filterkuchen in einem Sprühtrockner mit Atomizer oder Zweistoffdüse oder Einstoffdüse und/oder integriertem Fließbett trocknen.

Zur Granulation kann man einen Walzenkompaktor oder ähnliche Einrichtung einsetzen.

In einer besonders bevorzugten Form können die Fällungskieselsäuren mittels einer Flash-Trocknung getrocknet werden.

Die erfindungsgemäße Fällungskieselsäure kann mit Organosilanen der Formeln I bis III modifiziert werden:

$$[R^1_n - (RO)_{3-n}Si - (Alk)_m - (Ar)_p ]_q[B] \qquad (I),$$

$$R^1_n(RO)_{3-n}Si - (Alkyl) \qquad (II),$$

oder

$$R^1_n(RO)_{3-n}Si - (Alkenyl) \qquad (III),$$

in denen bedeuten

B:         -SCN, -SH, -Cl, -NH$_2$ (wenn q = 1) oder -Sx- (wenn q = 2),

R und R$^1$:     eine Alkylgruppe mit 1 bis 4 Kohlenstoffatomen, den Phenylrest, wobei alle Reste R und R$^1$ jeweils die gleiche oder eine verschiedene Bedeutung haben können,

R:         eine C$_1$ bis C$_4$-Alkyl, -C$_1$ bis C$_4$-Alkoxygruppe,

**EP 0 983 966 B1**

n:       0; 1 oder 2,

Alk:       einen zweiwertigen linearen oder verzweigten Kohlenwasserstoffrest mit 1 bis 18 Kohlenstoffatomen,

m:       0 oder 1,

Ar:       einen Arylenrest mit 6 bis 12 C-Atomen, bevorzugt mit 6 C-Atomen,

p:       0 oder 1 mit der Maßgabe, daß p und n nicht gleichzeitig 0 bedeuten,

x:       eine ganze Zahl von 2 bis 8,

Alkyl:       einen einwertigen linearen oder verzweigten gesättigten Kohlenwasserstoffrest mit 1 bis 20 Kohlenstoffatomen, bevorzugt 2 bis 8 Kohlenstoffatomen,

Alkenyl:       einen einwertigen linearen oder verzweigten ungesättigten Kohlenwasserstoffrest mit 2 bis 20 Kohlenstoffatomen, bevorzugt 2 bis 8 Kohlenstoffatomen.

q:       1 oder 2

Bevorzugterweise können die in der Tabelle 1 aufgeführten Silane eingesetzt werden:

Tabelle 1

Silane

| Degussa Nomenclature | Chemical Name | Chemical Formula | CAS-No. | EINECS | TSCA/MITI |
|---|---|---|---|---|---|
| Si 69 | Bis(triethoxysilylpropyl)tetrasulfane | $(C_2H_5O)_3Si\text{-}(CH_2)_3\text{-}S_4\text{-}(CH_2)_3\text{-}Si(OC_2H_5)_3$ | 40372-72-3 | 254-896-5 | listed/2-3124 |
| Si 108 | Octyltrimethoxysilane | $(CH_3O)_3Si\text{-}C_8H_{17}$ | 3069-40-7 | 221-388-7 | not listed |
| Si 116 | Hexadecyltrimethoxysilane | $(CH_3O)_3Si\text{-}C_{16}H_{33}$ | 16415-12-6 | 240-464-3 | PMN/ --- |
| Si 118* | Octadecyltrimethoxysilane | $(CH_3O)_3Si\text{-}C_{18}H_{37}$ | 3069-42-9 | 221-339-2 | listed/ --- |
| Si 203 | Propyltriethoxysilane | $(C_2H_5O)_3Si\text{-}C_3H_7$ | 2550-02-9 | 219-842-7 | listed/ --- |
| Si 208 | Octyltriethoxysilane | $(C_2H_5O)_3Si\text{-}C_8H_{17}$ | 2943-75-1 | 220-941-2 | listed/ --- |
| Si 230 | 3-Chloropropyltriethoxsilane | $(C_2H_5O)_3Si\text{-}(CH_2)_3\text{-}Cl$ | 5089-70-3 | 225-805-6 | listed/ --- |
| Si 255* | Ethyl(3-triethoxysilylpropyl)carbamate | $(C_2H_5O)_3Si\text{-}(CH_2)_3\text{-}NHCOOC_2H_5$ | 17945-05-0 | 241-872-4 | listed/ --- |
| Si 264 | 3-Thiocyanatopropyltriethoxysilane | $(C_2H_5O)_3Si\text{-}(CH_2)_3\text{-}SCN$ | 34708-08-2 | 252-161-3 | listed/ --- |
| Si 266* | Bis(triethoxysilylpropyl)disulfane | $(C_2H_5O)_3Si\text{-}(CH_2)_3\text{-}S_2\text{-}(CH_2)_3\text{-}Si(OC_2H_5)_3$ | 56706-10-6 | 260-350-7 | not listed |
| Si 270* | (3-Triethoxysilylpropyl)trimethylammonium-chloride in ethanol/ water | $(C_2H_6O)_3Si\text{-}(CH_2)_3\text{-}N^+(CH_3)_3\ Cl^-$ | 84901-27-9 | 284-463-6 | not listed |
| Si 275* | (3-Triethoxysilylpropyl)dimethyloctadecyl-ammoniumchloride in ethanol/ water | $(C_2H_5O)_3Si\text{-}(CH_2)_3\text{-}N^+(CH_3)_2\ (C_{18}H_{37})Cl^-$ | 62117-57-1 | 263-413-7 | not listed |
| Mixil® N 50*: Si 251/ Si 252 | 3-Aminopropyltriethoxysilane/ Bis(3-triethoxysilylpropyl)amine | $(C_2H_5O)_3Si\text{-}(CH_2)_3\text{-}NH_2$ / $(C_2H_5O)_3Si\text{-}(CH_2)_3\text{-}NH\text{-}(CH_2)_3\text{-}Si(OC_2H_5)_3$ | 919-30-2/ 13497-18-2 | 213-048-4/ 236-818-1 | listed/2-2061 |
| Si 216 | Hexadecyltriethoxysilane | $(C_2H_5O)_3Si\text{-}C_{16}H_{33}$ | | | |

Silane Emulsions

| Degussa Nomenclature | Active Ingredient | Chemical Formula | CAS-No. | EINECS | TSCA |
|---|---|---|---|---|---|
| WS 374 | Bis(triethoxysilylpropyl)tetrasulfane | $(C_2H_5O)_3Si\text{-}(CH_2)_3\text{-}S_4\text{-}(CH_2)_3\text{-}Si(OC_2H_5)_3$ | 40372-72-3 | 254-896-5 | listed |
| WS 405 | Octyltriethoxysilane | $(C_2H_5O)_3Si\text{-}C_8H_{17}$ | 2943-75-1 | 220-941-2 | listed |
| WS 431 | Hexadecyltriethoxysilane | $(C_2H_5O)_3Si\text{-}C_{16}H_{33}$ | 16415-13-7 | 240-465-9 | not listed |
| WS 650 | 3-Thiocyanatopropyltriethoxysilane | $(C_2H_3O)_3Si\text{-}(CH_2)_3\text{-}SCN$ | 34708-08-2 | 252-161-3 | listed |

* limited availability

Die Modifizierung mit Organosilanen kann in Mischungen von 0,5 bis 50 Teilen, bezogen auf 100 Teile Fällungskieselsäure, insbesondere 2 bis 15 Teile, bezogen auf 100 Teile Fällungskieselsäure, durchgeführt werden, wobei die Reaktion zwischen Fällungskieselsäure und Organosilan während der Mischungsherstellung (in situ) oder außerhalb (vormodifiziert) durch Aufsprühen und anschließendes Tempern der Mischung oder durch Mischen des Silans und der Kieselsäuresuspension mit anschließender Trocknung und Temperung durchgeführt werden kann.

In einer bevorzugten Ausführungsform der Erfindung kann als Silan das Bis(triethoxysilyl-propyl)-tetrasulfan (Handelsname Si 69 der Degussa AG) eingesetzt werden.

Die erfindungsgemäße Fällungskieselsäure kann in vulkanisierbaren Kautschukmischungen als Verstärkerfüllstoff in Mengen von 2 bis 200 Teilen, bezogen auf 100 Teile Kautschuk als Pulver, Mikroperlen oder Granulat sowohl mit Silanmodifizierung als auch ohne Silanmodifizierung eingemischt werden.

Die Zugabe eines oder mehrerer der oben genannten Silane kann zusammen mit den erfindungsgemäßen Kieselsäuren zur Kautschukmischung erfolgen, wobei die Reaktion zwischen Füllstoff und Silan während des Mischprozesses bei erhöhten Temperaturen abläuft (in-situ-Modifizierung) oder in bereit vormodifizierter Form (zum Beispiel DE-PS 40 04 781), das heißt, beide Reaktionspartner werden außerhalb der eigentlichen Mischungsherstellung zur Reaktion gebracht.

Eine weitere Möglichkeit besteht darin, die Fällungskieselsäuren mit Organosilanen in Mischungen von 0,5 bis 50 Teilen, bezogen auf 100 Teile Fällungskieselsäure, insbesondere 2 bis 15 Teile, bezogen auf 100 Teile Fällungskieselsäure zu modifizieren, wobei die Reaktion zwischen Fällungskieselsäure und Organosilan während der Mischungsherstellung (in situ) oder außerhalb durch Aufsprühen und anschließendes Tempern der Mischung oder durch Mischen des Silans und der Kieselsäuresuspension mit anschließender Trocknung und Temperung durchgeführt wird.

Neben Mischungen, die ausschließlich die erfindungsgemäßen Kieselsäuren, mit und ohne Organosilane gemäß Formel I bis III als Füllstoffe enthalten, können die Kautschukmischungen zusätzlich mit einem oder mehreren mehr oder weniger verstärkenden Füllstoffen gefüllt sein. So kann ein Verschnitt zwischen Rußen (zum Beispiel Furnace-, Gas-, Flamm-, Acetylenruße) und den erfindungsgemäßen Kieselsäuren, mit und ohne Silan, aber auch zwischen Naturfüllstoffen, wie zum Beispiel Clays, Kieselkreiden, weiteren bekannten im Handel erhältlichen Kieselsäuren und den erfindungsgemäßen Kieselsäuren eingesetzt werden.

Das Verschnittverhältnis richtet sich auch hier, wie bei der Dosierung der Organosilane, nach dem zu erzielenden Eigenschaftsbild der fertigen Gummimischung. Das Verhältnis zwischen den erfindungsgemäßen Fällungskieselsäuren und den anderen oben genannten Füllstoffen kann 5 - 95 % betragen.

Neben den erfindungsgemäßen Kieselsäuren, den Organosilanen und anderen Füllstoffen bilden die Elastomere einen weiteren wichtigen Bestandteil der Kautschukmischung. Die erfindungsgemäßen Kieselsäuren können in allen mit Beschleuniger/Schwefel, aber auch peroxidisch vernetzbaren Kautschukarten, eingesetzt werden. Zu nennen sind hierbei Elastomere, natürliche und synthetische, ölgestreckt oder nicht, als Einzelpolymer oder Verschnitt (Blend) mit anderen Kautschuken, wie zum Beispiel Naturkautschuke, Butadienkautschuke, Isoprenkautschuke, Butadien-Styrol-Kautschuke, insbesondere SBR, hergestellt mittels des Lösungspolymerisationsverfahrens, Butadien-Acrylnitrilkautschuke, Butylkautschuke, Terpolymere aus Ethylen, Propylen und nicht konjugierte Diene. Ferner kommen für Kautschukgemische mit den genannten Kautschuken die folgenden zusätzlichen Kautschuke in Frage:

Carboxylkautschuke, Epoxidkautschuke, Trans-Polypentenamer, halogenierte Butylkautschuke, Kautschuke aus 2-Chlor-Butadien, Ethylen-Vinylacetat-Copolymere, Ethylen-Propylen-Copolymere, gegebenenfalls auch chemische Derivate des Naturkautschuks sowie modifizierte Naturkautschuke.

Weitere Zusätze, wie Weichmacher, Stabilisatoren, Aktivatoren, Pigmente, Alterungsschutzmittel und Verarbeitungshilfsmittel, können in den üblichen Dosierungen eingesetzt werden.

Die erfindungsgemäßen Fällungskieselsäuren, mit und ohne Silan, können Einsatz in allen Gummianwendungen, vor allem im Reifen, hier vor allem im Reifenunterbau, aber auch zum Beispiel in Fördergurten, Dichtungen, Keilriemen, Schläuchen, Schuhsohlen etc., finden.

Außerdem kann die erfindungsgemäße Fällungskieselsäure in Batterieseparatoren, in Silikonkautschuk und als Trägerkieselsäure zum Einsatz kommen.

Zur Erzielung eines guten Wertebildes in einer Polymermischung ist die Dispersion der Fällungskieselsäure in der Matrix, dem Polymer, von entscheidender Bedeutung.

Es hat sich gezeigt, daß der wk-Koeffizient ein Maß für die Dispergierbarkeit einer Fällungskieselsäure ist.

Der wk-Koeffizient wird wie folgt bestimmt:

Die Messung beruht auf dem Prinzip der Laserbeugung. Dabei wird mit einem CILAS-Granulometer 1064 L gemessen.

Zur Bestimmung werden 1,3 g der Fällungskieselsäure in 25 ml Wasser überführt und 4,5 min mit Ultraschall bei 100 W (90 % gepulst) behandelt. Danach wird die Lösung in die Meßzelle überführt und eine weitere Minute mit Ultraschall behandelt.

Die Detektion mit Hilfe zweier sich in einem unterschiedlichen Winkel zur Probe befindlichen Laserdioden erfolgt während der Ultraschallbehandlung. Nach dem Prinzip der Lichtbeugung werden die Laserstrahlen gebeugt.

Das entstehende Beugungsbild wird rechnergestützt ausgewertet. Die Methode ermöglicht es, über einen weiten Meßbereich (ca. 40 nm - 500 µm) die Partikelgrößenverteilung zu bestimmen.

Ein wesentlicher Punkt hierbei ist, daß der Energieeintrag durch Ultraschall eine Simulation des Energieeintrags durch mechanische Kräfte in industriellen Mischaggregaten der Reifenindustrie darstellt.

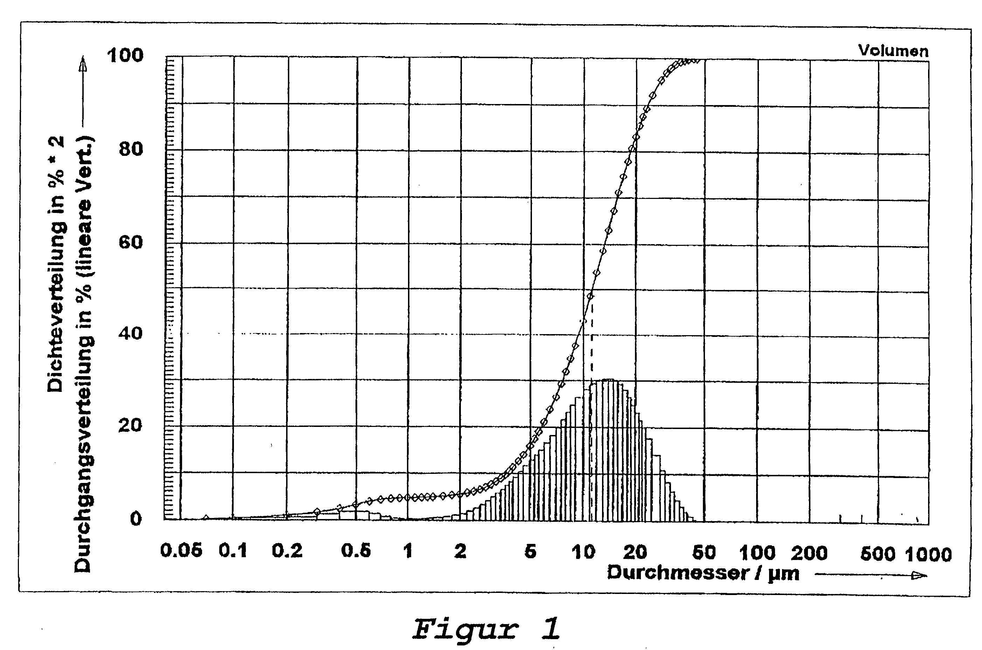

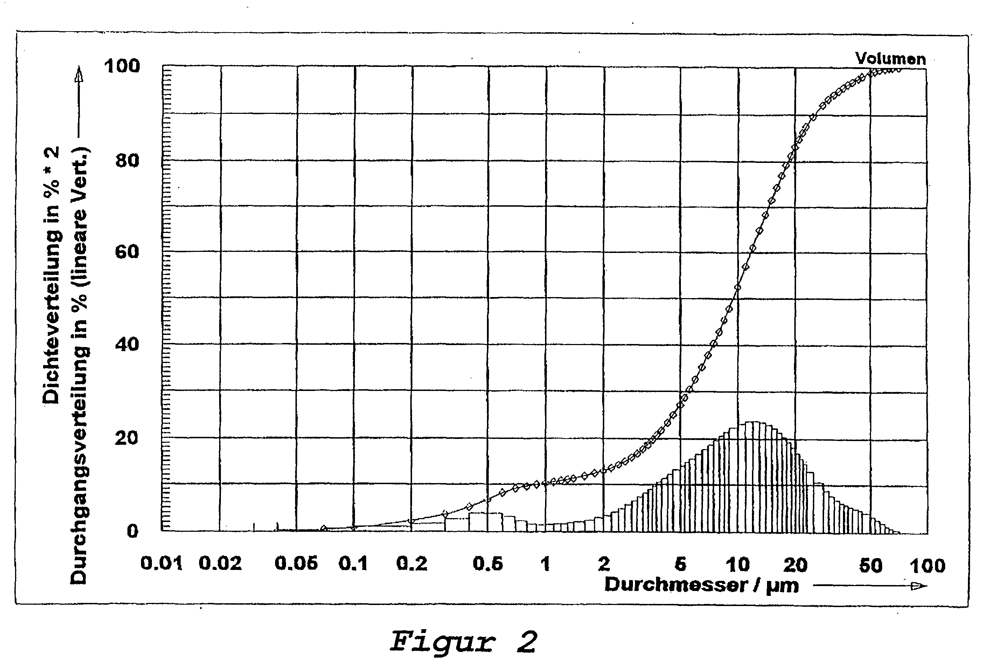

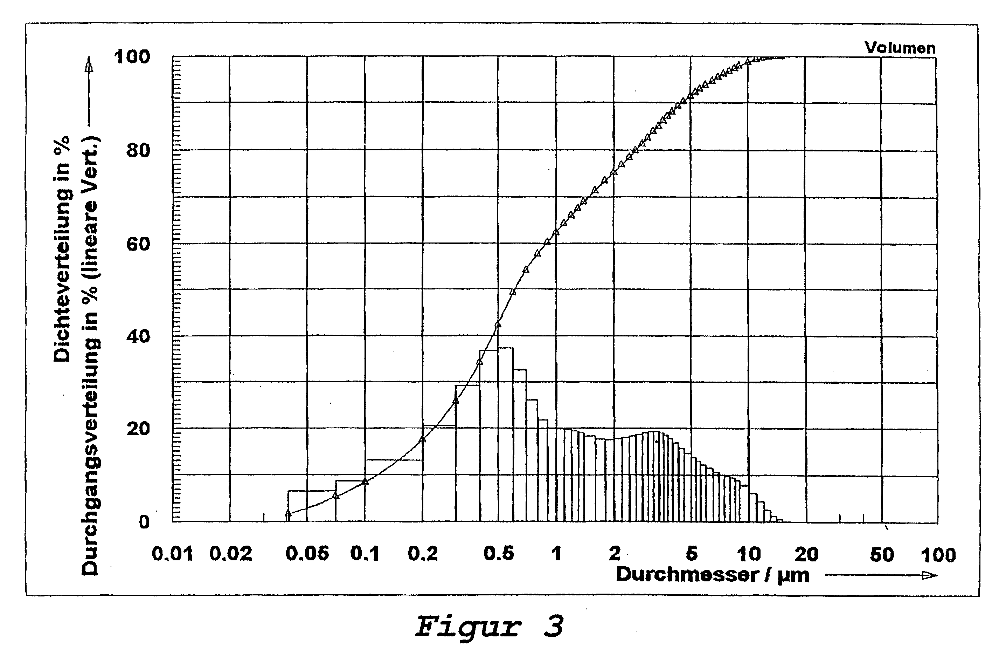

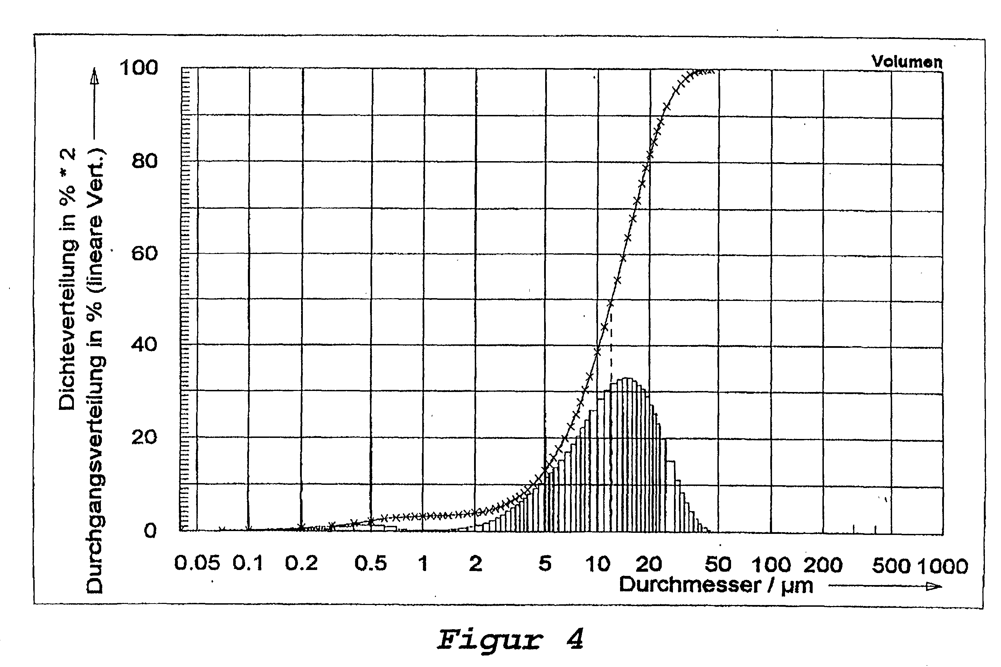

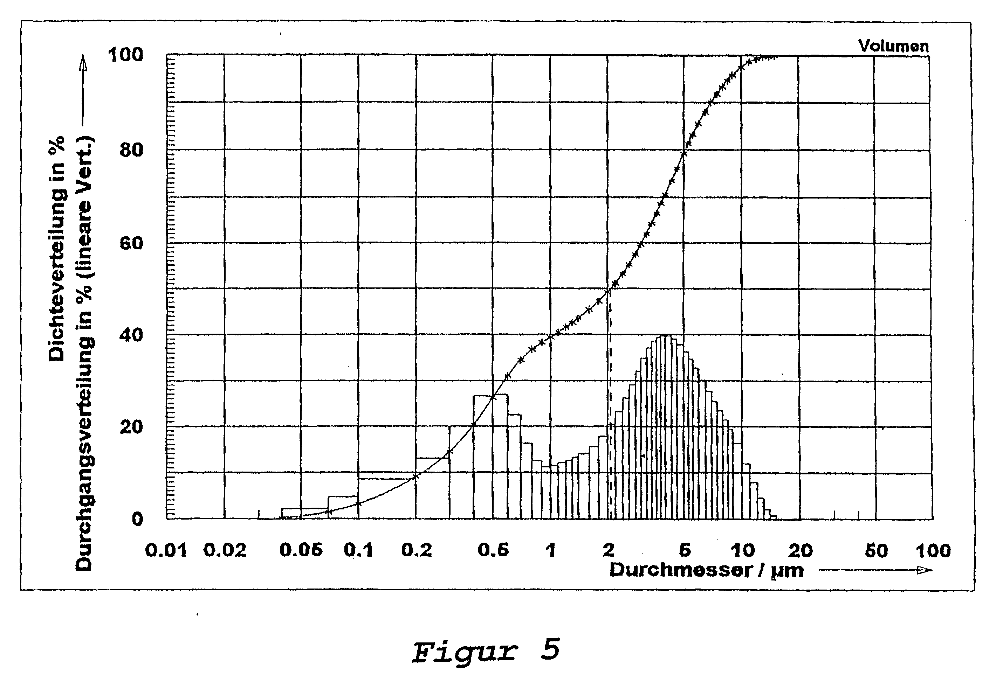

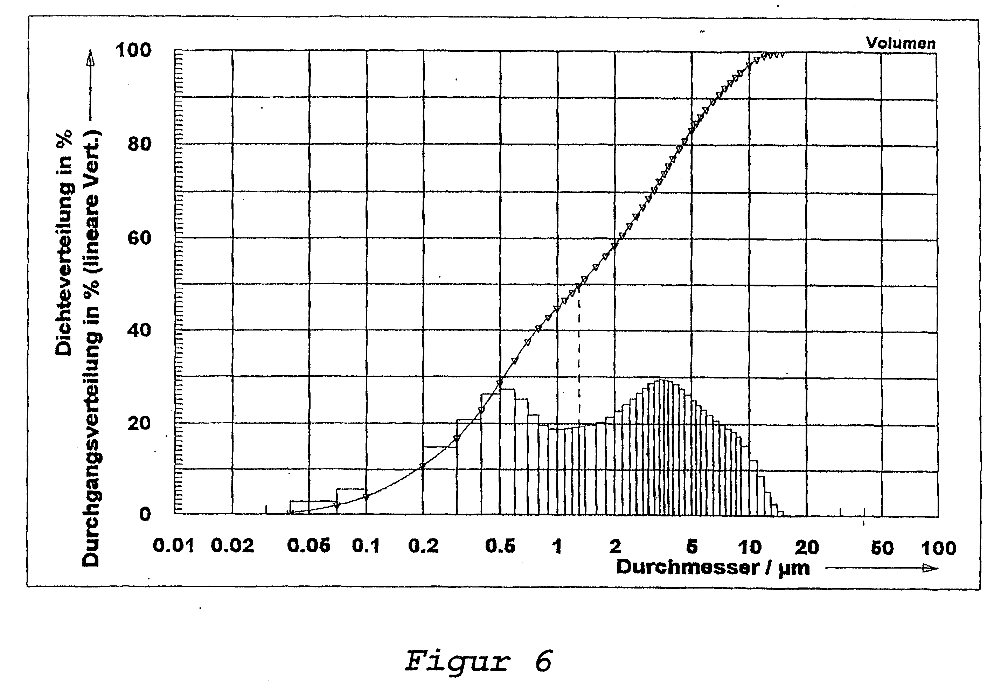

Die Ergebnisse der Messungen der Partikelgrößenverteilung von erfindungsgemäßen Fällungskieselsäuren und von Vergleichskieselsäuren sind in den Figuren 1 - 6 dargestellt.

Die Kurven zeigen im Bereich um 1,0 - 100 µm eine erstes Maximum in der Partikelgrößenverteilung und im Bereich < 1,0 µm ein weiteres Maximum. Der Peak im Bereich 1,0 -100 µm gibt den Anteil an unzerkleinerten Kieselsäurepartikeln nach der Ultraschallbehandlung an. Diese recht groben Partikel werden in den Kautschukmischungen schlecht dispergiert. Der zweite Peak mit deutlich kleineren Partikelgrößen (< 1,0 µm) gibt denjenigen Teil an Partikeln der Kieselsäure an, der während der Ultraschallbehandlung zerkleinert worden ist. Diese sehr kleinen Partikel werden in Kautschukmischungen ausgezeichnet dispergiert.

Der wk-Koeffizient ist nun das Verhältnis der Peakhöhe der nicht abbaubaren Partikel (B), deren Maximum im Bereich 1,0 - 100 µm (B') liegt, zur Peakhöhe der abgebauten Partikel (A), deren Maximum im Bereich < 1,0 µm (A') liegt.

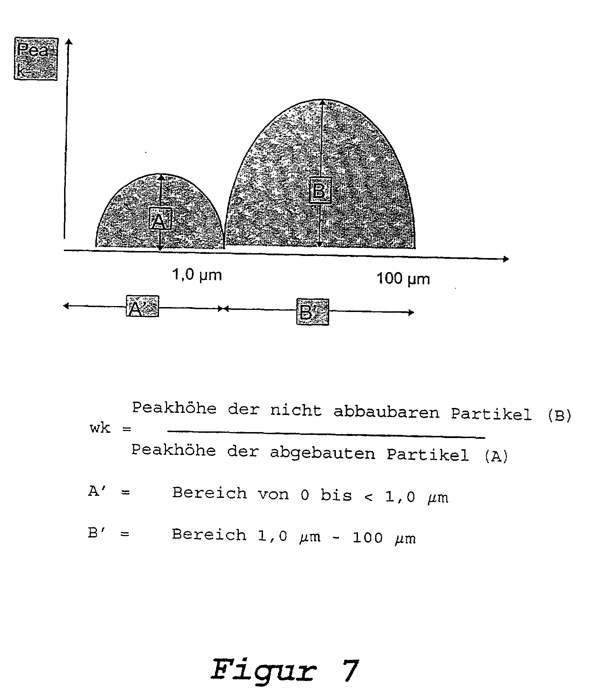

Die Zusammenhänge veranschaulicht die schematische Grafik gemäß Figur 7.

Der wk-Koeffizient ist damit eine Maß für die "Abbaubarkeit" (=Dispergierbarkeit) der Fällungskieselsäure. Es gilt, eine Fällungskieselsäure ist umso leichter dispergierbar, je kleiner der wk-Koeffizient ist, d.h. je mehr Partikel bei der Einarbeitung in Kautschuk abgebaut werden.

Die erfindungsgemäßen Kieselsäuren haben wk-Koeffizienten < 3,4. Das Maximum in der Partikelgrößenverteilung der nicht abbaubaren Partikel der erfindungsgemäßen Fällungskieselsäure liegt im Bereich 1,0 - 100 µm. Das Maximum in der Partikelgrößenverteilung der abgebauten Partikel der erfindungsgemäßen Fällungskieselsäure liegt im Bereich < 1,0 µm. Bekannte Fällungskieselsäuren haben deutlich höhere wk-Koeffizienten und andere Maxima in den Partikelgrößenverteilungen gemessen mit dem CILAS-Granulometer 1064 L und sind somit schlechter dispergierbar.

Die Dispergierbarkeit einer Fällungskieselsäure wird durch den Dispersionskoeffizienten D ausgedrückt. Dieser wird gemäß folgender Formel bestimmt:

$$D\ [\%] = \frac{\text{Summe der Partikelfläche/Bildanzahl} \cdot 10\,000 \cdot \text{Medaliafaktor}}{\text{Füllstoffvolumen} \cdot \text{Bildfläche}}$$

$$\text{Medaliafaktor} = \frac{\text{Füllstoffvolumen}\ /100 + 0,78}{2}$$

Die Auswertung erfolgt lichtmikroskopisch bei 150facher Vergrößerung an Glanzschnitten der Vulkanisate. Als nicht dispergierbare Partikel wurden Partikel größer als 28 $\mu m^2$ ausgewertet. Es werden 40 Bilder ausgewertet.

**Beispiele**

In den Beispielen werden folgende Stoffe eingesetzt:

| | |
|---|---|
| SMR 20 | Naturkautschuk |
| SMR 10 | Naturkautschuk |
| Buna CB 10 | Butadienkautschuk |
| Krynol 1712 | Styrol-Butadien-Kautschuk auf Basis Emulsionspolymerisation |
| Buna SB 1500 | Styrol-Butadien-Kautschuk auf Basis Emulsionspolymerisation |
| X 50 S | 50:50 Verschnitt aus Si 69 (Bis(3-triethoxysilylpropyl)tetrasulfan und N 330 |
| ZnO RS | Zinkoxid |
| Stearinsäure | |
| Sunpar 150 | paraffinisches Öl |
| Naftolen ZD | aromatisches Öl |
| Novares C 80 | Harz |
| Koresin (Pastillen) | Phenol Formaldehyd Harz |
| Antilux 654 | Mikrokristalliner Wachs |
| Vulkanox 4020 | N-(1, 3-Dimethylbutyl)-N'-phenyl-p-phenylendiamin |
| Vulkanox 4010 NA/LG | Alterungsschutzmittel |

(fortgesetzt)

| Vulkanox HS/LG | Alterungsschutzmittel |
|---|---|
| Protektor G 35 P | Ozonschutzwachs |
| Cofill 11 GR | Haftvermittler auf Resorcin-Basis |
| HEXA K | Hexamethylentetramin |
| DPG | Diphenylguanidin |
| CBS | N-Cyclohexyl-2-benzthiazylsulfenamid |
| TBBS | N-tert. Butyl-2-benzthiazylsulfenamid |
| Schwefel | |
| Crystex unlöslich | unlöslicher Schwefel |

| Vergleichsprodukte: | |
|---|---|
| Corax N 326 | Ruß der Degussa |
| Corax N 375 | Ruß der Degussa |
| Corax N 660 | Ruß der Degussa |
| Ultrasil VN2 | Kieselsäure der Degussa mit einer $N_2$-Oberfläche von ca. 125 m²/g; $Al_2O_3$-Gehalt 0,16 Gew.-% |
| Ultrasil VN3 | Kieselsäure der Degussa mit einer $N_2$-Oberfläche von ca. 125 m²/g; $Al_2O_3$-Gehalt 0,17 Gew.-% |
| Hisil 233 | Kieselsäure der PPG mit einer $N_2$-Oberfläche von ca. 150 m²/g; $Al_2O_3$-Gehalt 0,33 Gew.-% |
| Perkasil KS 300 | Kieselsäure der Akzo mit einer $N_2$-Oberfläche von ca. 125 m²/g; $Al_2O_3$-Gehalt 0,14 Gew.-% |
| Perkasil KS 404 | Kieselsäure der Akzo mit einer $N_2$-Oberfläche von ca. 160 m²/g; $Al_2O_3$-Gehalt 0,15 Gew.-% |
| Perkasil KS 408 | Kieselsäure der Akzo mit einer $N_2$-Oberfläche von ca. 160 m²/g, $Al_2O_3$-Gehalt 0,15 Gew.-% |
| Zeosil 1165 MP | Kieselsäure der Rhone-Poulenc mit einer $N_2$-Oberfläche von ca. 150 m²/g, $Al_2O_3$-Gehalt 0,65 Gew.-% |

**Beispiel 1**

*Herstellung einer Fällungskieselsäure im $N_2$-Bereich von 120 - 140 m²/g*

In einem Bottich werden unter Rühren 46 m³ Wasser auf 88°C erwärmt. Unter Aufrechterhaltung der Temperatur von 88°C werden bei pH 9,0, der durch Zugabe von Natronwasserglas eingestellt wird, soviel Natronwasserglas (Modul 3,42, Dichte 1,348) und 96%ige Schwefelsäure unter ständigem Rühren zudosiert, so daß nach 125 min ein Feststoffgehalt von 88,5 g/l erreicht ist. Zusätzlich werden gleichzeitig unter ständigem Rühren 265 l einer Aluminiumsulfatlösung (Dichte 1,28) zudosiert. Danach wird Schwefelsäure bis zum Erreichen eines pH-Wertes zwischen 3 und 5 zugegeben. Der Feststoff wird auf einer Filterpresse abgetrennt, gewaschen und anschließend getrocknet und gegebenenfalls vermahlen.
Die erhaltene Fällungskieselsäure hat die folgenden physikalisch-chemischen Daten:

| BET-Oberfläche | 123 m²/g |
|---|---|
| CTAB-Oberfläche | 110 m²/g |
| BET/CTAB | 1,12 |
| DBP-Zahl | 203 ml/100 g |
| Searszahl | 9,7 |
| $Al_2O_3$-Gehalt | 0,59 % |
| wk-Koeffizient | 0,5 |

**Beispiel 2**

*Herstellung einer Fällungskieselsäure im $N_2$-Bereich von 130 - 150 m²/g*

In einem Bottich werden unter Rühren 53,5 l Wasser auf 80°C erwärmt. Unter Aufrechterhaltung der Temperatur von 80°C werden bei pH 9,0, der durch Zugabe von Natronwasserglas eingestellt wird, soviel Natronwasserglas (Modul 3,42, Dichte 1,348) und 50 %ige Schwefelsäure unter ständigem Rühren zudosiert, so daß nach 67 min ein Feststoffgehalt von 92,9 g/l erreicht ist. Zusätzlich werden unter ständigem Rühren 0,255 l einer Aluminiumsul fatlösung (Dichte 1,28) zudosiert. Danach wird Schwefelsäure bis zum Erreichen eines pH-Wertes zwischen 3 und 5 zugegeben. Der Feststoff wird auf einer Filterpresse abgetrennt, gewaschen und anschließend einer Kurz- oder Langzeitrocknung unterworfen und gegebenfalls vermahlen.

Die erhaltene Fällungskieselsäure hat die folgenden physikalisch-chemischen Daten:

| BET-Oberfläche | 129 m$^2$/g |
|---|---|
| CTAB-Oberfläche | 124 m$^2$/g |
| BET/CTAB | 1,04 |
| DBP-Zahl | 243 ml/100 g |
| Searszahl | 16,2 |
| $Al_2O_3$-Gehalt | 0,59 % |

**Beispiel 3**

*Herstellung einer Fällungskieselsäure im $N_2$-Bereich von 120 - 140 m$^2$/g*

In einem Bottich werden unter Rühren 54,6 l Wasser auf 80°C erwärmt. Unter Aufrechterhaltung der Temperatur von 80°C werden bei pH 9,0, der durch Zugabe von Natronwasserglas eingestellt wird, soviel Natronwasserglas (Modul 3,42, Dichte 1,348) und 50%ige Schwefelsäure unter ständigem Rühren zudosiert, so daß nach 67 min ein Feststoffgehalt von 91,4 g/l erreicht ist. Zusätzlich werden unter ständigem Rühren 0,784 l einer Aluminiumsulfatlösung (Dichte 1,28) zudosiert. Danach wird Schwefelsäure bis zum Erreichen eines pH-Wertes zwischen 3 und 5 zugegeben. Der Feststoff wird auf einer Filterpresse abgetrennt, gewaschen und anschließend einer Kurz- oder Langzeitrocknung unterworfen und gegebenfalls vermahlen.

Die erhaltene Fällungskieselsäure hat die folgenden physikalisch-chemischen Daten:

| BET-Oberfläche | 152 m$^2$/g |
|---|---|
| CTAB-Oberfläche | 129 m$^2$/g |
| BET/CTAB | 1,19 |
| DBP-Zahl | 241 ml/100 g |
| Searszahl | 16,4 |
| $Al_2O_3$-Gehalt | 0,98 % |

**Beispiel 4**

*Herstellung einer Fällungskieselsäure im $N_2$-Bereich von 120 - 140 m$^2$/g*

In einem Bottich werden unter Rühren 50,4 l Wasser auf 80°C erwärmt. Unter Aufrechterhaltung der Temperatur von 80°C werden bei pH 9,0, der durch Zugabe von Natronwasserglas eingestellt wird, soviel Natronwasserglas (Modul 3,42, Dichte 1,348) und 50%ige Schwefelsäure unter ständigem Rühren zudosiert, so daß nach 67 min ein Feststoffgehalt von 97,6 g/l erreicht ist. Zusätzlich werden unter ständigem Rühren 1,47 l einer Aluminiumsulfatlösung (Dichte 1,28) zudosiert. Danach wird Schwefelsäure bis zum Erreichen eines pH-Wertes zwischen 3 und 5 zugegeben. Der Feststoff wird auf einer Filterpresse abgetrennt, gewaschen und anschließend einer Kurz- oder Langzeitrocknung unterworfen und gegebenfalls vermahlen.

Die erhaltene Fällungskieselsäure hat die folgenden physikalisch-chemischen Daten:

| BET-Oberfläche | 130 m$^2$/g |
|---|---|
| CTAB-Oberfläche | 101 m$^2$/g |
| BET/CTAB | 1,29 |
| DBP-Zahl | 227 ml/100 g |
| Searszahl | 18,4 |
| $Al_2O_3$-Gehalt | 1,96 % |

**Beispiel 5**

*Herstellung einer Fällungskieselsäure im $N_2$-Bereich von 140 - 160 $m^2$/g*

In einem Bottich werden unter Rühren 50,4 l Wasser auf 80°C erwärmt. Unter Aufrechterhaltung der Temperatur von 80°C werden bei pH 9,0, der durch Zugabe von Natronwasserglas eingestellt wird, soviel Natronwasserglas (Modul 3,42, Dichte 1,348) und 50%ige Schwefelsäure unter ständigem Rühren zudosiert, so daß nach 67 min ein Feststoffgehalt von 99,4 g/l erreicht ist. Zusätzlich werden unter ständigem Rühren 2,21 l einer Aluminiumsulfatlösung (Dichte 1,28) zudosiert. Danach wird Schwefelsäure bis zum Erreichen eines pH-Wertes zwischen 3 und 5 zugegeben. Der Feststoff wird auf einer Filterpresse abgetrennt, gewaschen und anschließend einer Kurz- oder Langzeittrocknung unterworfen und gegebenenfalls vermahlen.

Die erhaltene Fällungskieselsäure hat die folgenden physikalisch-chemischen Daten:

| | |
|---|---|
| BET-Oberfläche | 154 m$^2$/g |
| CTAB-Oberfläche | 100 m$^2$/g |
| BET/CTAB | 1,54 |
| DBP-Zahl | 222 ml/100 g |
| Searszahl | 16,6 |
| $Al_2O_3$-Gehalt | 4,28 % |

**Beispiel 6**

Bestimmung des wk-Koeffizienten mit dem Cilas Granulometer 1064 L an einer erfindungsgemäßen Kieselsäure mit einer BET-Oberfläche von 110-130 m$^2$/g gemäß Beispiel 1 und Vergleich mit Standardkieselsäuren im selben Oberflächenbereich. Zusätzlich sind die Werte B, A, B' und A' gemäß Figur 7 angegeben.

| Produktname | CTAB-Oberfläche [m$^2$/g] | wk-Koeffizient | B | A | B' [μm] | A' [μm] |
|---|---|---|---|---|---|---|
| Ultrasil VN 2 | 120 | 20 | 40 | 2 | 13,3 | 0,5 |
| Perkasil KS 300 | 120 | 6 | 24 | 4 | 11,7 | 0,5 |
| KS Beispiel 1 | 123 | 0,5 | 19 | 37,5 | 7,7 | 0,5 |

**Beispiel 7**

Bestimmung des wk-Koeffizienten mit dem Cilas Granulometer 1064 L an einer erfindungsgemäßen Kieselsäure mit einer BET-Oberfläche von 120-140 m$^2$/g und Vergleich mit Standardkieselsäure im selben Oberflächenbereich. Zusätzlich sind die Werte B, A, B' und A' gemäß Figur 7 angegeben.

| Produktname | CTAB-Oberfläche [m$^2$/g] | wk-Koeffizient | B | A | B' [μm] | A' [μm] |
|---|---|---|---|---|---|---|
| Hisil 233 | 138 | 26,7 | 32 | 1,2 | 14,4 | 0,5 |
| KS Beispiel 9 | 130 | 1,5 | 40 | 27 | 3,4 | 0,5 |
| KS Beispiel 7 | 129 | 1,1 | 30 | 27,5 | 3,0 | 0,5 |

**Beispiel 8**

Bestimmung des wk-Koeffizienten mit dem Cilas Granulometer 1064 L an einer erfindungsgemäßen Kieselsäure mit einer BET-Oberfläche von 140-160 m$^2$/g und Vergleich mit Standardkieselsäuren im selben Oberflächenbereich. Zusätzlich sind die Werte B, A, B' und A' gemäß Figur 7 angegeben.

| Produktname | CTAB-Oberfläche [m$^2$/g] | wk-Koeffizient | B | A | B' [μm] | A' [μm] |
|---|---|---|---|---|---|---|
| Zeosil 1165 MP | 150 | 3,4 | 38,7 | 11,4 | 7,9 | 0,6 |
| Perkasil 404 | 160 | 18,3 | 33 | 1,8 | 15,4 | 0,6 |
| Perkasil 408 | 160 | 12,9 | 27 | 2,1 | 13,4 | 0,6 |

(fortgesetzt)

| Produktname | CTAB-Oberfläche [m$^2$/g] | wk-Koeffizient | B | A | B' [µm] | A' [µm] |
|---|---|---|---|---|---|---|
| KS Beispiel 5 | 154 | 1,7 | 22 | 13 | 3,4 | 0,55 |
| KS Beispiel 3 | 152 | 1,4 | 33 | 24 | 3,0 | 0,5 |

Tabelle 2

| WK-Koeffizienten der erfindungsgemäßen Fällungskieselsäuren | | | | | |
|---|---|---|---|---|---|
| Beispiel Nr. | WK | B | A | B' [µm] | A' [µm] |
| 1 | 0,5 | 19 | 37,5 | 7,7 | 0,5 |
| 2 | 1,1 | 30 | 27,5 | 3,0 | 0,5 |
| 3 | 1,4 | 33 | 24 | 3,0 | 0,5 |
| 4 | 1,5 | 40 | 27 | 3,4 | 0,5 |
| 5 | 1,7 | 22 | 13 | 3,4 | 0,55 |

**Beispiel 9**

Meßergebnisse der erfindungsgemäßen Fällungskieselsäuren nach Beispiel 6 und Beispiel 7 im Vergleich zu Standardfällungskieselsäuren (siehe Figur 1-6 im Anhang).

**Beispiel 10**

Erfindungsgemäße Fällungskieselsäure nach Beispiel 4 (mit einem $Al_2O_3$-Gehalt von 0,59 Gew.-%) im Vergleich zu Standardkieselsäure und dem bisher Verwendung findenden Verschnitt vom Ruß N 660 und dem Ruß N 375 in einer NR/BR-Mischung für eine Reifenseitenwand:

| | 1 | 2 | 3 |
|---|---|---|---|
| SMR 10 | 50 | 50 | 50 |
| Buna CB 10 | 50 | 50 | 50 |
| Corax N 660 | 20 | 20 | 20 |
| Corax N 375 | 30 | - | - |
| Zeosil 1165 MP | - | 30 | - |
| Erfindungsgemäße Kieselsäure (Beispiel 4) | - | - | 30 |
| X 50 S | - | 3 | 3 |
| ZnO RS | 3,5 | 3,5 | 3,5 |
| Stearinsäure | 2 | 2 | 2 |
| Naftolen ZD | 7 | 7 | 7 |
| Novares C 80 | 3 | 3 | 3 |
| Protektor G 35 P | 3 | 3 | 3 |
| Vulkanox 4020 | 2,5 | 2,5 | 2,5 |
| Vulkacit D | - | 2 | 2 |
| Vulkacit CZ-MG-C | - | 1 | 1 |
| TBBS | 0,8 | - | - |
| Schwefel | 1,8 | 1,8 | 1,8 |
| Mooney-Viskosität ML(1+4) | 56 | 70 | 64 |
| Vulkanisatdaten: 160·C/t$_{95}$ % t$_{95}$ [%] | 12,4 | 6,8 | 6,4 |
| Modul 300 % [MPa] | 5,2 | 7,0 | 7,2 |
| Heat Build Up $\Delta T_{Center}$ [°C] | 88 | 64 | 51 |

(fortgesetzt)

| | 1 | 2 | 3 |
|---|---|---|---|
| Permanent Set [%] | 2,6 | 0,8 | 0,5 |
| Phillips-Wert | 7 | 7 | 8 |
| Ball Rebound 60 °C | 67 | 74 | 79 |
| tan δ 60 °C | 0,129 | 0,080 | 0,067 |

Die erfindungsgemäße Kieselsäure gemäß Beispiel 9 führt gegenüber der Standardkieselsäure Zeosil 1165 MP mit einem $Al_2O_3$-Gehalt von 0,65 Gew.-% und einer CTAB-Oberfläche von 150 m²/g und einem wk-Koeffizienten von 3,4 und dem bislang in einer Seitenwandmischung Verwendung findenden Ruß N 375 zu einer höheren Vulkanisationsgeschwindigkeit, höheren Modulwerten, niedrigerem Hitzeaufbau (was einer längeren Lebensdauer eines Reifens entspricht) und einem höheren Ball Rebound 60 °C und einem niedrigeren tan δ 60 °C (was einem niedrigeren Rollwiderstand entspricht).

**Beispiel 11**

Erfindungsgemäße Fällungskieselsäure nach Beispiel 1 im Vergleich zu dem bisher Verwendung findenden Ruß N 326 in einer NR/SBR-Mischung für eine Reifenkarkasse mit einem speziellen Haftsystem:

| | 1 | 2 |
|---|---|---|
| SMR 10 | 60 | 60 |
| Buna SB 1500 | 40 | 40 |
| Corax N 326 | 50 | - |
| Erfindungsgemäße Kieselsäure (Beispiel 1) | - | 50 |
| Ultrasil VN 3 | 15 | 15 |
| X 50 S | - | 7 |
| ZnO RS | 8 | 8 |
| Stearinsäure | 1 | 1 |
| Cofill 11 GR | 5 | 5 |
| Naftolen ZD | 3 | 3 |
| Vulkanox 4010 NA/LG | 0,5 | 0,5 |
| Vulkanox HS/LG | 0,8 | 0,8 |
| HEXA K | 1,5 | 1,5 |
| TBBS | 0,8 | 1,5 |
| Crystex unlöslich | 4 | 4 |
| DPG | - | 2 |
| Vulkanisatdaten: 160 ° C/$t_{95}$ % | | |
| Trennfestigkeit (tack) [N] | 13,8 | 26,7 |

Die erfindungsgemäße Kieselsäure gemäß Beispiel 1 führt gegenüber dem bislang in einer Karkassmischung mit einem speziellen Haftsystem Verwendung findenden Ruß N 326 zu einer höheren Trennfestigkeit (was einer höheren Verarbeitungssicherheit bei der Konfektionierung entspricht).

**Figuren 1 bis 7**

Figur 1    Ergebnis der Messung von Ultrasil VN 2 mit der Laserbeugungsmethode.

Figur 2    Ergebnis der Messung von Perkasil KS 300 mit der Laserbeugungsmethode.

Figur 3    Ergebnis der Messung von erfindungsgemäßer Kieselsäure nach Beispiel 1 mit der Laserbeugungsmethode.

Figur 4    Ergebnis der Messung von Hisil 233 mit der Laserbeugungsmethode.

Figur 5    Ergebnis der Messung von erfindungsgemäßer Kieselsäure nach Beispiel 4 mit der Laserbeugungsmethode.

Figur 6    Ergebnis der Messung von erfindungsgemäßer Kieselsäure nach Beispiel 2 mit der Laserbeugungsmethode.

Figur 7    Ermittlung des wk-Koeffizienten.

**Patentansprüche**

1.    Fällungskieselsäure, **gekennzeichnet durch** einen $Al_2O_3$-Gehalt von 0,2 bis 5,0 Gew.-% und einem **durch** Laserstreuung bestimmten wk-Koeffizienten kleiner 3,4. (Verhältnis der Peakhöhe der **durch** Ultraschall nicht abbaubaren Partikel im Bereich 1.0 - 100 μm zur Peakhöhe der abgebauten Partikel mit Maximum im Bereich < 1.0 μm).

2.    Fällungskieselsäure nach Anspruch 1,
      **dadurch gekennzeichnet,**
      **dass** sie eine CTAB-Oberfläche von 80 bis 139 m$^2$/g aufweist.

3.    Fällungskieselsäure nach Anspruch 1 oder 2,
      **dadurch gekennzeichnet,**
      **dass** sie eine BET-Oberfläche von 80 bis 180 m$^2$/g aufweist.

4.    Fällungskieselsäure nach einem der Ansprüche 1 bis 3, **gekennzeichnet durch** folgende Parameter:

| | |
|---|---|
| BET-Oberfläche | 80 - 180 m$^2$/g |
| CTAB-Oberfläche | 80 - 139 m$^2$/g |
| Verhältnis BET/CTAB | 1,0 - 1,6 |
| Searszahl (Verbrauch 0,1 n NaOH) | 5 - 25 ml |
| DBP-Zahl | 200 - 300 ml/100 g |
| $Al_2O_3$-Gehalt | < 5 % |
| wk-Koeffizient (Verhältnis der Peakhöhe der **durch** Ultraschall nicht abbaubaren Partikel im Bereich 1.0 - 100 μm zur Peakhöhe der abgebauten Partikel mit Maximum im Bereich < 1.0 μm) | < 3,4 |

5.    Verfahren zur Herstellung einer Fällungskieselsäure mit folgenden Parametern:

| | |
|---|---|
| BET-Oberfläche | 80 - 160 m$^2$/g |
| CTAB-Oberfläche | 80 - 140 m$^2$/g |
| Verhältnis BET/CTAB | 1,0 - 1,6 |
| Searszahl (Verbrauch 0,1 n NaOH) | 5- 25 ml |
| DBP-Zahl | 200 - 300 ml/100 g |
| $Al_2O_3$-Gehalt | 0,2 - 5 % |
| wk-Koeffizient (Verhältnis der Peakhöhe der durch Ultraschall nicht abbaubaren Partikel im Bereich 1.0 - 100 μm zur Peakhöhe der abgebauten Partikel mit Maximum im Bereich < 1.0 μm) | < 3,4 |

**dadurch gekennzeichnet,**
**dass** man Alkalisilikatlösung mit Mineralsäuren und Aluminiumsulfatlösung bei Temperaturen von 60 - 95 °C bei einem pH-Wert von 7,0 - 11,0 unter ständigem Rühren bis zu einer Feststoffkonzentration von 40 - 110 g/l umsetzt, den pH-Wert auf einen Wert zwischen 3 und 5 einstellt, die Fällungskieselsäure abfiltriert, wäscht und anschließend trocknet, gegebenenfalls vermahlt oder granuliert.

**6.** Verfahren nach Anspruch 5,
**dadurch gekennzeichnet,**
**dass** die Zugabe von Alkalisilikatlösung, Mineralsäure und Aluminiumsulfatlösung für 30 bis 90 Minuten unterbrochen und anschließend fortgesetzt wird.

**7.** Verfahren gemäß Anspruch 6,
**dadurch gekennzeichnet,**
**dass** man zur Filtration Kammerfilterpressen oder Membranfilterpressen oder Bandfilter oder Drehfilter oder Membranfilterpressautomaten oder zwei der Filter in Kombination einsetzt.

**8.** Verfahren gemäß Anspruch 6,
**dadurch gekennzeichnet,**
**dass** man zur Trocknung einen Stromtrockner, Etagentrockner, Flash-Trockner oder Spin-Flash-Trockner einsetzt.

**9.** Verfahren gemäß Anspruch 6,
**dadurch gekennzeichnet,**
**dass** man verflüssigten Filterkuchen in einem Sprühtrockner mit Atomizer oder Zweistoffdüse oder Einstoffdüse und/oder integriertem Fließbett trocknet.

**10.** Verfahren gemäß Anspruch 6,
**dadurch gekennzeichnet,**
**dass** man zur Granulation einen Walzenkompaktor einsetzt.

**11.** Fällungskieselsäuren nach Anspruch 1,
**dadurch gekennzeichnet,**
**dass** ihre Oberflächen mit Organosilanen der Formel I bis III

$$[R^1{}_n\text{-}(RO)_{3\text{-}n}Si\text{-}(Alk)_m\text{-}(Ar)_p]_q[B] \qquad (I),$$

$$R^1{}_n(RO)_{3\text{-}n}Si\text{-}(Alkyl) \qquad (II),$$

oder

$$R^1{}_n(RO)_{3\text{-}n}Si - (Alkenyl) \qquad (III),$$

modifiziert sind, in denen bedeuten

| | |
|---|---|
| B: | -SCN, -SH, -Cl, -NH$_2$ (wenn q = 1) oder -Sx-(wenn q = 2), |
| R and R$^1$: | eine Alkylgruppe mit 1 bis 4 Kohlenstoffatomen, den Phenylrest, wobei alle Reste R und R$^1$ jeweils die gleiche oder eine verschiedene Bedeutung haben können, |
| R: | eine C$_1$ bis C$_4$-Alkyl, -C$_1$ bis C$_4$-Alkoxygruppe, |
| n: | 0; 1 oder 2, |
| Alk: | einen zweiwertigen linearen oder verzweigten Kohlenwasserstoffrest mit 1 bis 18 Kohlenstoffatomen, |
| m: | 0 oder 1, |
| Ar.: | einen Arylenrest mit 6 bis 12 C-Atomen, bevorzugt mit 6 C-Atomen, |
| p: | 0 oder 1 mit der Maßgabe, dass p und n nicht gleichzeitig 0 bedeuten, |
| x: | eine ganze Zahl von 2 bis 8, |
| Alkyl: | einen einwertigen linearen oder verzweigten gesättigten Kohlenwasserstoffrest mit 1 bis 20 Kohlenstoffatomen, bevorzugt 2 bis 8 Kohlenstoffatomen, |
| Alkenyl: | einen einwertigen linearen oder verzweigten ungesättigten Kohlenwasserstoffrest mit 2 bis 20 Kohlenstoffatomen, bevorzugt 2 bis 8 Kohlenstoffatomen, |

q:　　　　　1 oder 2.

**12.** Verfahren zur Herstellung der Kieselsäuren gemäß Anspruch 11,
**dadurch gekennzeichnet,**
**dass** man die Fällungskieselsäuren mit Organosilanen in Mischungen von 0,5 bis 50 Teilen, bezogen auf 100 Teile Fällungskieselsäure, insbesondere 1 bis 15 Teile, bezogen auf 100 Teile Fällungskieselsäure modifiziert, wobei die Reaktion zwischen Fällungskieselsäure und Organosilan während der Mischungsherstellung (in situ) oder außerhalb durch Aufsprühen und anschließendes Tempern der Mischung oder durch Mischen des Silans und der Kieselsäuresuspension mit anschließender Trocknung und Temperung durchgeführt wird.

**13.** Vulkanisierbare Kautschukmischungen und Vulkanisate, die die Fällungskieselsäure gemäß Anspruch 1 als Füllstoff enthalten.

**Claims**

**1.** A precipitated silica **characterized by** an $Al_2O_3$ content of from 0.2 to 5.0% by weight and a wk coefficient, determined by laser scattering, of less than 3.4 (ratio of the peak height of the particles in the range 1.0 - 100 µm which cannot be broken down by ultrasound to the peak height of the particles with a maximum in the range < 1.0 µm that have been broken down).

**2.** A precipitated silica according to claim 1, **characterized in that** it has a CTAB surface area of from 80 to 139 $m^2$/g.

**3.** A precipitated silica according to claim 1 or 2, **characterized in that** it has a BET surface area of from 80 to 180 $m^2$/g.

**4.** A precipitated silica according to any one of claims 1 to 3, **characterized by** the following parameters:

| | |
|---|---|
| BET surface area | 80 - 180 $m^2$/g |
| CTAB surface area | 80 - 139 $m^2$/g |
| BET/CTAB ratio | 1.0 - 1.6 |
| Sears number (consumption of 0.1 N NaOH) | 5 - 25 ml |
| DBP number | 200 - 300 ml/100 g |
| $Al_2O_3$ content | < 5% |
| wk coefficient (ratio of the peak height of the particles in the range 1.0 - 100 µm which cannot be broken down by ultrasound to the peak height of the particles with a maximum in the range < 1.0 µm that have been broken down) | < 3.4 |

**5.** A process for preparing a precipitated silica having the following parameters:

| | |
|---|---|
| BET surface area | 80 - 160 $m^2$/g |
| CTAB surface area | 80 - 140 $m^2$/g |
| BET/CTAB ratio | 1.0 - 1.6 |
| Sears number (consumption of 0.1 N NaOH) | 5 - 25 ml |
| DBP number | 200 - 300 ml/100 g |
| $Al_2O_3$ content | 0.2 - 5% |
| wk coefficient (ratio of the peak height of the particles in the range 1.0 - 100 µm which cannot be broken down by ultrasound to the peak height of the particles with a maximum in the range < 1.0 µm that have been broken down) | < 3.4 |

**characterized in that** alkali metal silicate solution is reacted with mineral acids and aluminium sulphate solution at temperatures of 60 - 95°C and at a pH of 7.0 - 11.0 with constant stirring to a solids concentration of 40 - 110 g/l, the pH is adjusted to a value of from 3 to 5, and the precipitated silica is filtered off, washed and subsequently dried and subjected if desired to grinding or granulation.

6. A process according to claim 5, **characterized in that** the addition of alkali metal silicate solution, mineral acid and aluminium sulphate solution is interrupted for from 30 to 90 minutes and subsequently continued.

7. A process according to claim 6, **characterized in that** filtration is carried out using chamber filter presses or membrane filter presses or belt filters or rotary filters or automated membrane filter press units or two of the filters in combination.

8. A process according to claim 6, **characterized in that** drying is carried out using a pneumatic-conveyor dryer, rack dryer, flash dryer or spin-flash dryer.

9. A process according to claim 6, **characterized in that** liquefied filter cakes are dried in a spray dryer with atomizer or two-fluid nozzle or single-fluid nozzle and/or integrated fluidized bed.

10. A process according to claim 6, **characterized in that** granulation is carried out using a roll compactor.

11. A precipitated silica according to claim 1, **characterized in that** its surface has been modified with organosilanes of the formula I to III

$$[R^1{}_n\text{-}(RO)_{3-n}Si\text{-}(Alk)_m\text{-}(Ar)_p]_q[B] \qquad\qquad (I),$$

$$R^1{}_n(RO)_{3-n}Si\text{-}(alkyl) \qquad\qquad (II)$$

or

$$R^1{}_n(RO)_{3-n}Si\text{-}(alkenyl) \qquad\qquad (III),$$

in which

| | |
|---|---|
| B | is -SCN, -SH, -Cl, -NH$_2$ (if q = 1) or -S$_x$- (if q = 2), |
| R and R$^1$ | are an alkyl group having 1 to 4 carbon atoms or the phenyl radical, it being possible for all radicals R and R$^1$ to have in each case the same definition or a different definition, |
| R | is a C$_1$ to C$_4$ alkyl or C$_1$ to C$_4$ alkoxy group, |
| n | is 0, 1 or 2, |
| Alk | is a divalent linear or branched hydrocarbon radical having 1 to 18 carbon atoms, |
| m | is 0 or 1, |
| Ar | is an arylene radical having 6 to 12 carbon atoms, preferably having 6 carbon atoms, |
| p | is 0 or 1, with the proviso that p and n are not both 0, |
| x | is an integer from 2 to 8, |
| Alkyl | is a monovalent linear or branched saturated hydrocarbon radical having 1 to 20 carbon atoms, preferably 2 to 8 carbon atoms, |
| Alkenyl | is a monovalent linear or branched unsaturated hydrocarbon radical having 2 to 20 carbon atoms, preferably 2 to 8 carbon atoms, and |
| q | is 1 or 2. |

12. A process for preparing the silicas according to claim 11, **characterized in that** precipitated silicas are modified with organosilanes in mixtures of from 0.5 to 50 parts, based on 100 parts of precipitated silica, in particular from 1 to 15 parts, based on 100 parts of precipitated silica, the reaction between precipitated silica and organosilane being carried out during the preparation of the mixture (in situ) or externally, by spray application of the mixture followed by heat treatment, or by mixing of the silane and the silica suspension with subsequent drying and heat treatment.

**13.** A vulcanizable rubber mixture or vulcanizate which comprises as filler a precipitated silica according to claim 1.

**Revendications**

**1.** Silice précipitée,
**caractérisée par**
une teneur en $Al_2O_3$ de 0,2 à 5,0 % en poids et un coefficient wk, déterminé par dispersion de laser, inférieur à 3,4 (rapport de la hauteur de pic des particules non dégradables par ultrasons dans la plage de 1,0-100 μm à la hauteur de pic des particules dégradées avec un maximum dans la plage < 1,0 μm.)

**2.** Silice précipitée selon la revendication 1,
**caractérisée par**
une surface CTAB de 80 à 139 $m^2$/g.

**3.** Silice précipitée selon la revendication 1 ou 2,
**caractérisée par**
une surface BET de 80 à 180 $m^2$/g.

**4.** Silice précipitée selon l'une quelconque des revendications 1 à 3,
**caractérisée par**
les paramètres suivants :

| | |
|---|---|
| Surface BET | 80-180 $m^2$/g |
| Surface CTAB | 80-139 $m^2$/g |
| Rapport BET/CTAB | 1,0-1,6 |
| Indice de Sears (consommation de NaOH 0,1 N) | 5-25 ml |
| Indice DBP | 200-300 ml/100 g |
| Teneur en $Al_2O_3$ | < 5 % |
| Coefficient wk<br>(Rapport de la hauteur de pic des particules non dégradables par ultrasons, dans la plage de 1,0-100 μm, à la hauteur de pic des particules dégradées à maximum dans la plage < 1,0 μm.) | < 3,4 |

**5.** Procédé pour la préparation d'une silice précipitée ayant les paramètres suivants :

| | |
|---|---|
| Surface BET | 80-160 $m^2$/g |
| Surface CTAB | 80-140 $m^2$/g |
| Rapport BET/CTAB | 1,0-1,6 |
| Indice de Sears (consommation de NaOH 0,1 N) | 5-25 ml |
| Indice DBP | 200-300 ml/100 g |
| Teneur en $Al_2O_3$ | 0,2-5 % |
| Coefficient wk<br>(Rapport de la hauteur de pic des particules non dégradables par ultrasons, dans la plage de 1,0-100 μm, à la hauteur de pic des particules dégradées à maximum dans la plage < 1,0 μm.) | < 3,4 |

**caractérisé en ce qu'**
on fait réagir une solution de silicate alcalin avec des acides minéraux et une solution de sulfate d'ammonium, à des températures de 60-95°C, à un pH de 7,0-11,0, sous constante agitation, jusqu'à une concentration de matière sèche de 40-110 g/l, on ajuste le pH à une valeur comprise entre 3 et 5, la silice précipitée est séparée par filtration, lavée et ensuite séchée, éventuellement broyée ou granulée.

**6.** Procédé selon la revendication 5,
**caractérisé en ce qu'**
on interrompt pendant 30 à 90 minutes l'addition de la solution de silicate alcalin, d'acide minéral et de la solution de sulfate d'aluminium, et ensuite on la continue.

**7.** Procédé selon la revendication 6,
**caractérisé en ce qu'**
on utilise pour la filtration des filtres-presses à plateaux ou des filtres-presses à membrane ou des filtres à bande ou des filtres à tambour ou des dispositifs automatiques de filtres-presses et de filtres à membrane ou deux des filtres en combinaison.

**8.** Procédé selon la revendication 6,
**caractérisé en ce qu'**
on utilise pour le séchage un sécheur pneumatique, un sécheur à étages, un sécheur rapide ou un sécheur rapide rotatif.

**9.** Procédé selon la revendication 6,
**caractérisé en ce qu'**
on sèche les gâteaux de filtration fluidifiés, dans un sécheur par atomisation à atomiseur ou injecteur binaire ou injecteur monocomposant et/ou lit fluidisé intégré.

**10.** Procédé selon la revendication 6,
**caractérisé en ce qu'**
on utilise pour la granulation un compresseur à cylindre.

**11.** Silices précipitées selon la revendication 1,
**caractérisées en ce que**
leurs surfaces sont modifiées avec des organosilanes de formules I à III

$$[R^1{}_n\text{-}(RO)_{3-n}Si\text{-}(Alk)_m\text{-}(Ar)_p]_q[B] \qquad (I),$$

$$R^1{}_n(RO)_{3-n}Si\text{-}(alkyle) \qquad (II),$$

ou

$$R^1{}_n(RO)_{3-n}Si\text{-}(alcényle) \qquad (III),$$

dans lesquelles

| | |
|---|---|
| B | représente -SCN, -SH, -Cl, -NH$_2$ (lorsque q = 1) ou -Sx- (lorsque q = 2), |
| R et R$^1$ | représentent un groupe alkyle ayant de 1 à 4 atomes de carbone, le radical phényle, tous les radicaux R et R$^1$ pouvant avoir la même signification ou chacun une signification différente, |
| R | représente un groupe alkyle en C$_1$-C$_4$, alcoxy en C$_1$-C$_4$, |
| n | est 0, 1 ou 2, |
| Alk | représente un radical hydrocarboné divalent, linéaire ou ramifié, ayant de 1 à 18 atomes de carbone, |
| m | est 0 ou 1, |
| Ar | représente un radical arylène ayant de 6 à 12 atomes de carbone, de préférence ayant 6 atomes de carbone, |
| p | est 0 ou 1, étant entendu que p et n ne représentent pas simultanément 0, |
| x | est un nombre entier allant de 2 à 8, |
| alkyle | signifie un radical hydrocarboné saturé monovalent, linéaire ou ramifié, ayant de 1 à 20 atomes de carbone, de préférence 2 à 8 atomes de carbone, |
| alcényle | signifie un radical hydrocarboné insaturé monovalent, linéaire ou ramifié, ayant de 2 à 20 atomes de carbone, de préférence 2 à 8 atomes de carbone, |

q      est 1 ou 2.

12. Procédé pour la préparation des silices selon la revendication 11,
**caractérisé en ce qu'**
on modifie les silices précipitées avec des organosilanes en mélanges de 0,5 à 50 parties, par rapport à 100 parties de silice précipitée, en particulier de 1 à 15 parties, par rapport à 100 parties de silice précipitée, la réaction entre la silice précipitée et l'organosilane étant effectuée pendant la préparation du mélange (in situ) ou à l'extérieur par pulvérisation et traitement thermique subséquent du mélange ou par mélange du silane et de la suspension de silice avec séchage et traitement thermique subséquent.

13. Compositions de caoutchouc aptes à la vulcanisation et produits vulcanisés, qui contiennent en tant que charge la silice précipitée selon la revendication 1.

*Figur 1*

*Figur 2*

EP 0 983 966 B1

*Figur 3*

23

*Figur 4*

EP 0 983 966 B1

*Figur 5*

*Figur 6*

$$wk = \frac{\text{Peakhöhe der nicht abbaubaren Partikel (B)}}{\text{Peakhöhe der abgebauten Partikel (A)}}$$

A′ = Bereich von 0 bis < 1,0 $\mu$m

B′ = Bereich 1,0 $\mu$m - 100 $\mu$m

## *Figur 7*